# EUROPEAN PATENT SPECIFICATION

(11) **EP 3 294 596 B1**
(45) Date of publication and mention of the grant of the patent: **03.04.2019**
(21) Application number: 16733188.3
(22) Date of filing: 12.05.2016
(51) Int. Cl.: B60T 7/10, B60T 7/20, B60T 7/08

(54) **BRAKING DEVICE**
BREMSSYSTEM
SYSTÈME DE FREINAGE

(30) Priority: 15.05.2015 IT MO20150109
(43) Date of publication of application: 21.03.2018
(73) Proprietor: Safim S.p.A., 41123 Modena (IT)
(72) Inventor: GARUTI, Andrea, 41123 Modena (IT); MAMEI, Eronne, 41123 Modena (IT); MAMEI, Enrico, 41123 Modena (IT); MAMEI, Andrea, 41123 Modena (IT)
(74) Representative: Brunacci, Marco
(86) International application number: PCT/IB2016/052718
(87) International publication number: WO 2016/185327

(56) References cited:
- EP-A1- 0 047 403
- EP-A1- 1 504 975
- EP-A2- 1 923 286
- WO-A1-03/004333
- WO-A1-2013/071798
- WO-A2-2007/010490
- DE-A1-102006 041 011
- DE-A1-102008 014 459
- DE-U1- 8 914 101

## Description

### Technical Field

The present invention relates to a braking device.

### Background Art

Some recently introduced regulations establish that between a towing vehicle and its trailer a connection device shall be interposed having a pair of male joints able to be inserted inside a pair of relative female joints as well as an electrical connection to control the braking system of the trailer and to transmit any alarm signals from the trailer to the towing vehicle.

In particular, the female joints are connectable to a control line for supplying the braking system of the trailer and to an additional line, respectively, for deactivating the automatic and/or parking brake of the trailer itself.

As the person skilled in the art knows, the braking phases of a vehicle are generally three in number, i.e. the service braking, which occurs in normal operating conditions of the vehicle, the parking braking, i.e. when the vehicle is stationary in the same position, and the emergency braking.

These regulations also require that for agricultural tractors with hydraulic braking of the trailer, during the emergency braking of the towing vehicle, the service braking of the trailer is also activated, so as to have a gradual braking of the same.

One of these devices is disclosed in the DE 89 14 101 U1.

### Description of the Invention

The main aim of the present invention is to provide a braking device that allows to meet with the regulatory requirements by means of a solution which is simple from a constructive point of view and of reliable operation.

Within this aim, one object of the present invention is to provide a single device that allows to control in an easy and practical manner both the parking braking of the towing vehicle and the service and parking braking of the trailer. Another object of the present invention is to prevent the service braking of the trailer from remaining active during the parking braking of the towing vehicle. Yet another object of the present invention is to provide a braking device which allows to overcome the mentioned drawbacks of the prior art within the ambit of a simple, rational, easy, effective to use and affordable solution.

The above mentioned objects are achieved by the present braking device according to claim 1.

### Brief Description of the Drawings

Other characteristics and advantages of the present invention will become better evident from the description of a preferred, but not exclusive, embodiment of a braking device, illustrated by way of an indicative, but non-limiting, example in the accompanying drawings, wherein:

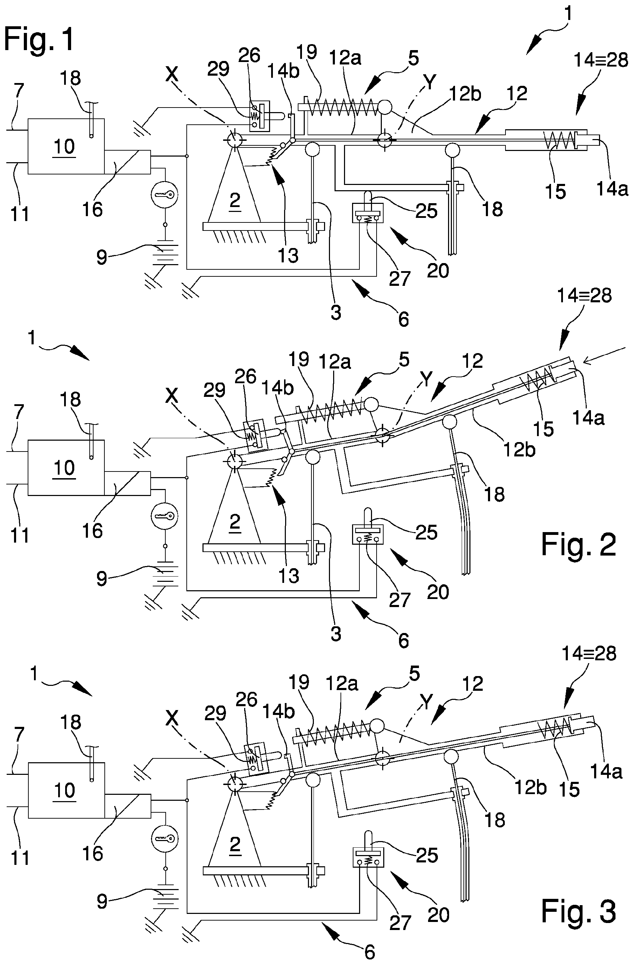

Figures 1 to 3 are schematic representations of a device according to the invention in three different operating conditions.

### Embodiments of the Invention

With particular reference to such figures, reference number 1 globally indicates a braking device.

The device 1 comprises a base body 2, associable with the chassis of a towing vehicle, and at least a trailer-brake valve 10 able to adjust the pressure along a control line 7 connectable to the braking system of the trailer and along an additional line 11 operatively connected to the automatic and/or parking brake (not shown in the figures) of the trailer. In particular, until the additional line 11 is pressurized the automatic and/or parking brake of the trailer is deactivated, while when the pressure along it goes to zero the automatic and/or parking brake is activated.

The device 1 further comprises first command means 3 associable with the parking brake of a towing vehicle (not shown in the figures) and activatable to operate the same, and second command means 5 connectable to the trailer-brake valve 10 and able to adjust the pressure along the control line 7. More in detail, the second command means 5 are activatable to send the working fluid under pressure along the control line 7, through the trailer-brake valve 10, and so operate the service braking of the trailer.

The device 1 also comprises a lever 12 which has at least a first portion 12a hinged to the body 2 around a first axis of rotation X and at least a second portion 12b, graspable by an operator, hinged to the first portion itself around a second axis of rotation Y.

The first portion 12a is associated with the first command means 3 and is movable between a rest position, in which the first command means 3 are deactivated, and at least a braking position, in which it is rotated with respect to the rest position and the first command means 3 are activated. Conveniently, the first portion 12a has a plurality of braking positions among which it moves continuously by applying a gradually increasing force on the first command means 3.

Locking means 13 of the first portion 12a are also provided in the braking position. More particularly, the locking means 13 are able to keep the first portion 12a in the braking position reached from time to time and are removable by means of a special command 14 to enable the return of the first portion itself to the rest position. In the embodiments shown in the figures, the locking means 13 are of the type of a ratchet lever and the command 14 is of the type of a button 14a operable in contrast with elastic means 15, e.g. of the type of a spring, to lift the lever and disengage it from the teeth of the ratchet.

Advantageously, the first command means 3 are of the mechanical type.

More in detail, the first command means 3 comprise at least a first cable of flexible and inextensible type, associated with the first portion 12a, which is able to pull the first cable following its rotation from the rest position towards the braking position.

As the first portion 12a rotates around the first axis X away from the braking position, the intensity increases of the tractive force exerted on the cable 3.

The second portion 12b is in turn associated with the second command means 5 and is movable between a rest position, in which the second command means themselves are deactivated, and at least a braking position, in which the second portion itself is rotated with respect to the rest position and the second command means 5 are activated so as to operate the service braking of the trailer.

Following the operation of the second portion 12b, i.e. the lifting thereof from the rest position, both the second portion itself and the first portion 12a move to a respective braking position by rotating around their respective axes X and Y. The rotation of the second portion 12b around the second axis Y in fact involves the exercise of a force on the first portion 12a through the relative hinging axis, which causes the rotation thereof around the first axis X. This operating condition corresponds to an emergency condition, shown in Figure 2, following which both the parking brake of the towing vehicle and the service braking of the trailer are activated.

Following the release of the second portion 12b, the latter returns to the rest position, while the first portion 12a remains in the braking position taken because of the locking means 13. This operating condition corresponds to the parking condition, shown in Figure 3, in which the parking brake of the towing vehicle is activated and the service braking of the trailer is deactivated.

In the embodiment shown in the figures, the second command means 5 are of the mechanical type and comprise at least a second cable 18 flexible and inextensible associated with the second portion 12b, which is able to pull the second cable 18 following its rotation towards the braking position, and elastic means 19 able to counteract such rotation of the second portion 12b. Even in this case, as the second portion 12b rotates around the relative second axis Y away from the rest position, the tractive force increases exerted on the second cable 18.

In an alternative embodiment, not shown in the figures, the second command means 5 are of the fluid-operated type and comprise at least a fluid-operated cylinder communicating with the trailer-brake valve 10 via a driving line. The second portion 12b is thus able to move the piston of the cylinder, it is hinged to, following the rotation thereof around the second axis Y. As the second portion 12b rotates around the relative second axis Y away from the rest position, the pressure of the working fluid also increases along the driving line. The pressure along the driving line and the tractive force exerted by the first portion 12a on the first cable 3 are therefore related to each other.

According to the invention, the device 1 also comprises third command means 20 operatively connected to the trailer-brake valve 10 and which are able to control the pressure of the working fluid along the additional line 11 to manage the state of the automatic and/or parking brake the trailer.

The third command means 20 are operable between an active position, in which they maintain the working fluid under pressure along the additional line 11 to maintain deactivated the automatic and/or parking brake of the trailer, and an inactive position, in which they set to zero the pressure of the working fluid along the additional line 11 so as to activate the automatic and/or parking brake itself.

Advantageously, the third command means 20 are of the electrical type and comprise an electrical circuit 6 connected to a power source 9. More in detail, the electrical circuit 6 is connected to a solenoid 16 in turn operatively connected to the trailer-brake valve 10. Following the flow of current along the electrical circuit 6, the solenoid 16 is activated allowing the flow of the working fluid along the additional line 11, while when the flow of current is interrupted, the solenoid 16 switches to the inactive state and the trailer-brake valve 10 puts the additional line 11 in communication with the discharge thus causing the activation of the automatic and/or parking brake of the trailer. The power source 9 can be composed, e.g., of the power battery of the towing vehicle.

According to the invention, the device 1 also comprises first and second activation means 25, 26, each movable between a relative first and a relative second work position in which they activate and deactivate, respectively the third command means 20.

The first activation means 25 are able to interact with the first portion 12a and move from the first to the second work position following the movement of the first portion 12a from the rest position to a braking position.

More particularly, in the embodiment shown in the figures, the first portion 12a maintains, in its rest position, the first activation means 25 in the relative first work position and first elastic means 27 are provided able to push the first activation means 25 towards the relative second work position following the displacement of the first portion 12a to the braking position.

Manual means 28 are also provided and operable by an operator to move the second activation means 26 from the second to the first work position.

In the embodiment shown in the figures, the manual means 28 correspond to the aforementioned command 14, i.e. they are associated with the second portion 12b and comprise the button 14a operable in contrast to the elastic means 15, where the button 14a is associated with a thrust element 14b, e.g. of the type of a metal rod or the like, able to interact with the second activation means 26. Therefore, the activation of the command 14 causes both the removal of the locking means 13 and the displacement of the second activation means 26 to the relative first work position.

More particularly, the second activation means 26 are located, in normal operating conditions (i.e. in any condition of use in which the manual means 28 are deactivated), in the relative second work position and are moved to the first work position following the operation of the manual means 28 by the operator. The second activation means 26 move from the second to the first work position in contrast to second elastic means 29.

In the preferred embodiment shown in the figures, the first and the second activation means 25 and 26 comprise a first and a second switch, respectively, able to close the electrical circuit 6 in the first work position and to open it in the second work position.

Therefore, when both the first and the second portion 12a and 12b are in the rest position (Figure 1), the first and second command means 3 and 5 are deactivated, while the third command means 20 are activated, since the first switch 25 is maintained in the relative first work position by the first portion 12a. In this operating condition the additional line 11 is then maintained under pressure so as to maintain deactivated the automatic and/or parking brake of the trailer.

As mentioned above, when the operator lifts the second portion 12b to move it to the braking position, the first portion 12a (Figure 2) is also lifted at the same time, whereby the parking brake of the towing vehicle and the service braking of the trailer are activated. The displacement of the first portion 12a from the rest position also causes the displacement of the first switch 25 from the first to the second work position, thus opening the electrical circuit 6 and interrupting the current flow arriving to the solenoid 16. During the lifting of the second portion 12b, the operator maintains the button 14a pressed and moves the second switch 26 from the second to the first work position, in contrast to the second elastic means 29 so as to transmit current to the solenoid 16 and maintain the automatic and/or parking brake of the trailer deactivated.

At the instant when the operator releases the second portion 12b (Figure 3), the parking brake of the towing vehicle remains activated while the service braking of the trailer is deactivated. By releasing the second portion 12b, the operator also releases the button 14a, so that the second switch 26 automatically returns to the second work position due to the action of the second elastic means 29.

In this operating configuration, the third command means 20 are deactivated because both the first and the second switch 25, 26 are located in the relative second work position, whereby the circuit 6 is not crossed by any current and, consequently, the trailer-brake valve 10 discharges the additional line 11 thus activating the automatic and/or parking brake of the trailer.

It has in practice been found how the described invention achieves the intended objects and in particular the fact is underlined that the use of a command lever having two portions hinged together and associated with respective command means allows managing the braking with a single device both in the parking and in the emergency phase.

In particular, the presence of an electrical circuit connected to the multifunction valve for controlling the pressure along the additional line and of two switches connected to the circuit itself, one of which is able to interact with the first portion of the lever and the other manually operable by the operator, allow to control in an easy and practical manner the activation and deactivation of the automatic and/or parking brake of the trailer.

## Claims

1. Braking device (1), comprising:
- a base body (2) associable with the chassis of a towing vehicle;
- at least a trailer-brake valve (10) able to adjust the pressure along a control line (7) connectable to the braking system of a trailer and along an additional line (11) operatively connectable to the automatic and/or parking brake of the trailer itself;
- first command means (3) associable at least with the parking brake of the towing vehicle and activatable to operate the same;
- second command means (5) operatively connected to said trailer-brake valve (10) and activatable to send a working fluid under pressure along said control line (7) and to operate the braking of the trailer;
**characterized in that** it further comprises:
- a lever (12) comprising at least a first portion (12a) hinged to said body (2) around a first axis (X) of rotation, associated with said first command means (3) and movable between a rest position and at least a braking position in which the first command means themselves are deactivated and activated respectively, there being provided removable locking means (13) of said first portion (12a) in said braking position, and at least a second portion (12b), graspable by an operator, hinged to said first portion (12a) around a second axis (Y) of rotation, associated with said second command means (5) and movable between a rest position and at least a braking position in which said second command means (5) are deactivated and activated, respectively; following the operation of said second portion (12b), the latter and said first portion (12a) move to a respective braking position by rotating around their respective axes (X, Y), while following the release of said second portion (12b) the latter returns to its rest position and said first portion (12a) remains stationary in the braking position due to said locking means (13);
- third command means (20) operatively connected to said trailer-brake valve (10) and operable between an active position, in which they maintain the working fluid under pressure along said additional line (11) to maintain deactivated the automatic and/or parking brake of the trailer, and an inactive position, in which they set to zero the pressure of the working fluid along said additional line (11) so as to activate the automatic and/or parking brake;
- first and second activation means (25, 26) each movable between a relative first and a relative second work position, in which they activate and deactivate, respectively said third command means (20), where said first activation means (25) are moved from the first to the second work position following the displacement of said first portion (12a) from the rest position to a braking position, and where manual means (28) are provided operable by an operator to move said second activation means (26) from the second to the first work position.

2. Device (1) according to claim 1, **characterized by** the fact that said first command means (3) are of the mechanical type and comprise at least a first inextensible cable associated with said first portion (12a), the latter being able to pull said first cable following its rotation towards said braking position.

3. Device (1) according to claim 1 or 2, **characterized by** the fact that said second command means (5) are of the mechanical type.

4. Device (1) according to claim 3, **characterized by** the fact that said second command means (5) comprise a second inextensible cable (18) associated with said second portion (12b), the latter being able to pull said second cable (18) following its rotation towards said braking position, and by the fact that it comprises elastic means (19) able to counteract the rotation of said second portion (12b) towards the braking position.

5. Device (1) according to claim 1 or 2, **characterized by** the fact that said second command means (5) comprise at least a fluid-operated cylinder and at least a driving line communicating on one side with the cylinder itself and on the other with said trailer-brake valve (10), said second portion (12b) being able to move the piston of said cylinder following its rotation around said second axis (Y).

6. Device (1) according to one or more of the preceding claims, **characterized by** the fact that said third command means (20) are of the electrical type.

7. Device (1) according to claim 6, **characterized by** the fact that said third command means (20) comprise an electrical circuit (6) connected to a power source (9) and by the fact that said first and said second activation means (25, 26) comprise a first and a second switch respectively, able to close said electrical circuit (6) in the first work position and to open it in the second work position.

8. Device (1) according to one or more of the preceding claims, **characterized by** the fact that it comprises first elastic means (27) able to push said first activation means (25) towards the second work position following the displacement of said first portion (12a) into a braking position.

9. Device (1) according to claim 7 or 8, **characterized by** the fact that said second switch (26) is located, in normal operating conditions, in the second work position and that is moved to the first work position following the operation of said manual means by the operator.

10. Device (1) according to one or more of the preceding claims, **characterized by** the fact that it comprises second elastic means (29) able to push said second activation means (26) towards the second work position.

11. Device (1) according to one or more of the preceding claims, **characterized by** the fact that said manual means (28) are associated with said second portion (12b).

12. Device (1) according to one or more of the preceding claims, **characterized by** the fact that said manual means (28) comprise at least a button (14a) which can be operated in contrast to elastic means (15) and associated with at least a thrust element (14b) able to interact with said second activation means (26).

## Patentansprüche

1. Bremsvorrichtung (1), umfassend:
- einen Grundkörper (2), der dem Fahrgestell eines Zugfahrzeugs zugeordnet werden kann;
- wenigstens ein Anhänger-Bremsventil (10), das in der Lage ist, den Druck entlang einer Steuerleitung (7), die mit dem Bremssystem eines Anhängers verbindbar ist, und entlang einer zusätzlichen Leitung (11), die betriebsfähig mit der Automatik- und/oder Parkbremse des Anhängers selbst verbindbar ist, anzupassen;
- erste Kommandoeinrichtungen (3), die wenigstens der Parkbremse des Zugfahrzeugs zugeordnet werden können und die aktivierbar sind, um dieselbe zu betätigen;
- zweite Kommandoeinrichtungen (5), die betriebsfähig mit dem Anhänger-Bremsventil (10) verbunden sind und aktivierbar sind, um ein Arbeitsmedium unter Druck entlang der Steuerleitung (7) zu senden und um die Bremse des Anhängers zu betätigen;
**dadurch gekennzeichnet, dass** es ferner umfasst:
- einen Hebel (12), umfassend wenigstens einen ersten Abschnitt (12a), der am Körper (2) um eine erste Drehachse (X) angelenkt ist, der den ersten Kommandoeinrichtungen (3) zugeordnet ist und zwischen einer Ruhestellung und wenigstens einer Bremsstellung, in der die ersten Kommandoeinrichtungen selbst jeweils deaktiviert und aktiviert sind, beweglich ist, wobei abnehmbare Verriegelungseinrichtungen (13) des ersten Abschnitts (12a) in der Bremsstellung vorgesehen sind, und wenigstens einen zweiten Abschnitt (12b), der von einem Bediener greifbar ist, der am ersten Abschnitt (12a) um eine zweite Drehachse (Y) angelenkt ist, den zweiten Kommandoeinrichtungen (5) zugeordnet ist und zwischen einer Ruhestellung und wenigstens einer Bremsstellung, in der die zweiten Kommandoeinrichtungen (5) jeweils deaktiviert und aktiviert sind, beweglich ist; wobei nach der Betätigung des zweiten Abschnitts (12b) sich der Letztere und der erste Abschnitt (12a) in eine jeweilige Bremsstellung bewegen, indem sie um ihre jeweiligen Achsen (X, Y) rotieren, während nach dem Lösen des zweiten Abschnitts (12b) der Letztere in seine Ruhestellung zurückkehrt und der erste Abschnitt (12a) aufgrund der Verriegelungseinrichtungen (13) ortsfest in der Bremsstellung verbleibt;
- dritte Kommandoeinrichtungen (20), die betriebsfähig mit dem Anhänger-Bremsventil (10) verbunden sind und zwischen einer aktiven Stellung, in der sie das Arbeitsmedium entlang der zusätzlichen Leitung (11) unter Druck halten, um die Automatik- und/oder Parkbremse des Anhängers deaktiviert zu halten, und einer inaktiven Stellung, in der sie den Druck des Arbeitsmediums entlang der zusätzlichen Leitung (11) auf Null setzen, um die Automatik- und/oder Parkbremse zu aktivieren, betreibbar sind;
- erste und zweite Aktivierungseinrichtungen (25, 26), die jeweils zwischen einer relativen ersten und einer relativen zweiten Arbeitsposition, in der sie die dritten Kommandoeinrichtungen (20) jeweils aktivieren und deaktivieren, beweglich sind, wobei die ersten Aktivierungseinrichtungen (25) von der ersten in die zweite Arbeitsposition bewegt werden, nachdem der erste Abschnitt (12a) aus der Ruhestellung in eine Bremsstellung versetzt wurde, und wobei manuelle Einrichtungen (28) vorgesehen sind, die von einem Bediener betreibbar sind, um die zweiten Aktivierungseinrichtungen (26) von der zweiten in die erste Arbeitsposition zu bewegen.

2. Vorrichtung (1) nach Anspruch 1, **dadurch gekennzeichnet, dass** die ersten Kommandoeinrichtungen (3) von mechanischem Typ sind und wenigstens ein erstes unausdehnbares Kabel umfassen, das dem ersten Abschnitt (12a) zugeordnet ist, wobei der Letztere in der Lage ist, das erste Kabel nach seiner Drehung in Richtung der Parkstellung zu ziehen.

3. Vorrichtung (1) nach Anspruch 1 oder 2, **dadurch gekennzeichnet, dass** die zweiten Kommandoeinrichtungen (5) von mechanischem Typ sind.

4. Vorrichtung (1) nach Anspruch 3, **dadurch gekennzeichnet, dass** die zweiten Kommandoeinrichtungen (5) ein zweites unausdehnbares Kabel (18) umfassen, das dem zweiten Abschnitt (12b) zugeordnet ist, wobei der Letztere in der Lage ist, das zweite Kabel (18) nach seiner Drehung in Richtung der Bremsstellung zu ziehen, und dadurch, dass sie elastische Einrichtungen (19) umfasst, die in der Lage sind, der Drehung des zweiten Abschnitts (12b) in Richtung der Bremsstellung entgegenzuwirken.

5. Vorrichtung (1) nach Anspruch 1 oder 2, **dadurch gekennzeichnet, dass** die zweiten Kommandoeinrichtungen (5) wenigstens einen mit einem Medium betriebenen Zylinder und wenigstens eine Antriebsleitung, die auf einer Seite mit dem Zylinder selbst und auf der anderen mit dem Anhänger-Bremsventil (10) kommuniziert, umfassen, wobei der zweite Abschnitt (12b) in der Lage ist, den Kolben des Zylinders nach seiner Drehung um die zweite Achse (Y) zu bewegen.

6. Vorrichtung (1) nach einem oder mehreren der vorstehenden Ansprüche, **dadurch gekennzeichnet, dass** die dritten Kommandoeinrichtungen (20) von mechanischem Typ sind.

7. Vorrichtung (1) nach Anspruch 6, **dadurch gekennzeichnet, dass** die dritten Kommandoeinrichtungen (20) eine elektrische Schaltung (6) umfassen, die mit einer Stromquelle (9) verbunden ist, und dadurch, dass die ersten und zweiten Aktivierungseinrichtungen (25, 26) jeweils einen ersten und einen zweiten Schalter umfassen, die in der Lage sind, die elektrische Schaltung (6) in der ersten Arbeitsposition zu schließen und in der zweiten Arbeitsposition zu öffnen.

8. Vorrichtung (1) nach einem oder mehreren der vorstehenden Ansprüche, **dadurch gekennzeichnet, dass** sie erste elastische Einrichtungen (27) umfasst, die in der Lage sind, nach der Verschiebung des ersten Abschnitts (12a) in eine Bremsstellung die ersten Aktivierungseinrichtungen (25) in Richtung der zweiten Arbeitsposition zu schieben.

9. Vorrichtung (1) nach Anspruch 7 oder 8, **dadurch gekennzeichnet, dass** sich der zweite Schalter (26) unter regulären Betriebsbedingungen in der zweiten Arbeitsposition befindet und dass er nach dem Betätigen der manuellen Einrichtungen durch den Bediener in die erste Arbeitsposition bewegt wird.

10. Vorrichtung (1) nach einem oder mehreren der vorstehenden Ansprüche, **dadurch gekennzeichnet, dass** sie zweite elastische Einrichtungen (29) umfasst, die in der Lage sind, die zweiten Aktivierungseinrichtungen (26) in Richtung der zweiten Arbeitsposition zu drücken.

11. Vorrichtung (1) nach einem oder mehreren der vorstehenden Ansprüche, **dadurch gekennzeichnet, dass** die manuellen Einrichtungen (28) dem zweiten Abschnitt (12b) zugeordnet sind.

12. Vorrichtung (1) nach einem oder mehreren der vorstehenden Ansprüche, **dadurch gekennzeichnet, dass** die manuellen Einrichtungen (28) wenigstens einen Taster (14a) umfassen, der im Gegensatz zu den elastischen Einrichtungen (15) betätigt werden kann und wenigstens einem Schubelement (14b) zugeordnet ist, das in der Lage ist, mit den zweiten Aktivierungseinrichtungen (26) in Wechselwirkung zu treten.

## Revendications

1. Dispositif de freinage (1), comprenant :
- un corps de base (2) pouvant être associé au châssis d'un véhicule de remorquage ;
- au moins une valve de commande de frein de remorque (10) apte à ajuster la pression le long d'une conduite de commande (7) pouvant être connectée au système de freinage d'une remorque et le long d'une conduite supplémentaire (11) pouvant être connectée opérationnellement au frein automatique et/ou de stationnement de la remorque elle-même ;
- des premiers moyens de commande (3) pouvant être associés au moins avec le frein de stationnement du véhicule de remorquage et pouvant être activés pour actionner celui-ci ;
- des deuxièmes moyens de commande (5) connectés opérationnellement à ladite valve de commande de frein de remorque (10) et pouvant être activés pour envoyer un fluide de travail sous pression le long de ladite conduite de commande (7) et pour actionner le freinage de la remorque ;
**caractérisé en ce qu'**il comprend en outre :
- un levier (12) comprenant au moins une première portion (12a) articulée sur ledit corps (2) autour d'un premier axe (X) de rotation, associée avec lesdits premiers moyens de commande (3) et mobile entre une position de repos et au moins une position de freinage dans laquelle les premiers moyens de commande sont eux-mêmes désactivés et activés respectivement, étant fournis des moyens de verrouillage amovibles (13) de ladite première portion (12a) dans ladite position de freinage, et au moins une deuxième portion (12b), pouvant être saisie par un opérateur, articulée sur ladite première portion (12a) autour d'un deuxième axe (Y) de rotation, associée avec lesdits deuxièmes moyens de commande (5) et mobile entre une position de repos et au moins une position de freinage dans laquelle lesdits deuxièmes moyens de commande (5) sont désactivés et activés, respectivement ; suite à l'actionnement de ladite deuxième portion (12b), cette dernière et ladite première portion (12a) se déplacent à une position de freinage respective par rotation autour de leurs axes respectifs (X, Y), alors qu'après la libération de la deuxième portion (12b), cette dernière retourne à sa position de repos et ladite première portion (12a) reste stationnaire dans la position de freinage en raison desdits moyens de verrouillage (13) ;
- des troisièmes moyens de commande (20) connectés opérationnellement à ladite valve de commande de frein de remorque (10) et pouvant être actionnés entre une position active, dans laquelle ils maintiennent le fluide de travail sous pression le long de ladite conduite supplémentaire (11) pour maintenir désactivé le frein automatique et/ou de stationnement de la remorque, et une position inactive, dans laquelle ils règlent sur zéro la pression du fluide de travail le long de ladite conduite supplémentaire (11) de manière à activer le frein automatique et/ou de stationnement ;
- des premiers et deuxièmes moyens d'activation (25, 26) chacun mobiles entre une première position de travail relative et une deuxième position de travail relative, dans lesquelles ils activent et désactivent, respectivement lesdits troisièmes moyens de commande (20), où lesdits premiers moyens d'activation (25) sont déplacés de la première position de travail à la deuxième position de travail après le déplacement de ladite première portion (12a) de la position de repos à la position de freinage, et où des moyens manuels (28) sont fournis pouvant être actionnés par un opérateur pour déplacer lesdits deuxièmes moyens d'activation (26) de la deuxième position de travail à la première position de travail.

2. Dispositif (1) selon la revendication 1, **caractérisé en ce que** lesdits premiers moyens de commande (3) sont du type mécanique et comprennent au moins un premier câble inextensible associé à ladite première portion (12a), cette dernière étant apte à tirer ledit premier câble après sa rotation vers ladite position de freinage.

3. Dispositif (1) selon la revendication 1 ou 2, **caractérisé en ce que** lesdits deuxièmes moyens de commande (5) sont du type mécanique.

4. Dispositif (1) selon la revendication 3, **caractérisé en ce que** lesdits deuxièmes moyens de commande (5) comprennent un deuxième câble inextensible (18) associé à ladite deuxième portion (12b), cette dernière étant apte à tirer ledit deuxième câble (18) après sa rotation vers ladite position de freinage, et **en ce qu'**ils comprennent des moyens élastiques (19) aptes à lutter contre la rotation de ladite deuxième portion (12b) vers la position de freinage.

5. Dispositif (1) selon la revendication 1 ou 2, **caractérisé en ce que** lesdits deuxièmes moyens de commande (5) comprennent au moins un cylindre hydraulique et au moins une conduite d'entraînement communiquant sur un côté avec le cylindre lui-même et sur l'autre avec ladite valve de commande de frein de remorque (10), ladite deuxième portion (12b) étant apte à déplacer le piston dudit cylindre après sa rotation autour dudit deuxième axe (Y).

6. Dispositif (1) selon l'une quelconque des revendications précédentes, **caractérisé en ce que** lesdits troisièmes moyens de commande (20) sont du type électrique.

7. Dispositif (1) selon la revendication 6, **caractérisé en ce que** lesdits troisièmes moyens de commande (20) comprennent un circuit électrique (6) connecté à une source d'alimentation (9) et **en ce que** lesdits premiers et deuxièmes moyens d'activation (25, 26) comprennent des premier et deuxième commutateurs respectivement, aptes à fermer ledit circuit électrique (6) dans la première position de travail et à l'ouvrir dans la deuxième position de travail.

8. Dispositif (1) selon l'une quelconque des revendications précédentes, **caractérisé en ce qu'**il comprend des premiers moyens élastiques (27) aptes à pousser lesdits premiers moyens d'activation (25) vers la deuxième position de travail après le déplacement de ladite première portion (12a) dans une position de freinage.

9. Dispositif (1) selon la revendication 7 ou 8, **caractérisé en ce que** ledit deuxième commutateur (26) est situé, en conditions d'actionnement normales, dans la deuxième position de travail et qu'il est déplacé à la première position de travail après l'actionnement desdits moyens manuels par l'opérateur.

10. Dispositif (1) selon l'une quelconque des revendications précédentes, **caractérisé en ce qu'**il comprend des deuxièmes moyens élastiques (29) aptes à pousser lesdits deuxièmes moyens d'activation (26) vers la deuxième position de travail.

11. Dispositif (1) selon l'une quelconque des revendications précédentes, **caractérisé en ce que** lesdits moyens manuels (28) sont associés à ladite deuxième portion (12b).

12. Dispositif (1) selon l'une quelconque des revendications précédentes, **caractérisé en ce que** lesdits moyens manuels (28) comprennent au moins un bouton (14a) qui peut être actionné à l'inverse des moyens élastiques (15) et associé à au moins un élément de poussée (14b) apte à interagir avec lesdits deuxièmes moyens d'activation (26).
